# EUROPÄISCHE PATENTSCHRIFT

(11) **EP 3 327 353 B1**
(45) Veröffentlichungstag und Bekanntmachung des Hinweises auf die Patenterteilung: **02.06.2021**
(21) Anmeldenummer: 17202837.5
(22) Anmeldetag: 21.11.2017
(51) Int. Cl.: F23Q 7/04, A24F 1/30, A47J 37/07

(54) **HEIZUNGSANORDNUNG**
HEATER ASSEMBLY
DISPOSITIF DE CHAUFFAGE

(30) Priorität: 23.11.2016 DE 102016122558
(43) Veröffentlichungstag der Anmeldung: 30.05.2018
(73) Patentinhaber: Köktürk, Murat, 86637 Wertingen (DE)
(72) Erfinder: Köktürk, Murat, 86637 Wertingen (DE)
(74) Vertreter: Müller Schupfner & Partner Patent- und Rechtsanwaltspartnerschaft mbB

(56) Entgegenhaltungen:
- CN-U- 203 454 206
- CN-U- 204 143 615
- DE-A1-102013 001 052
- DE-U1-202013 012 062
- FR-A1- 2 686 400
- US-A1- 2006 081 622

## Beschreibung

Die folgende Erfindung betrifft eine Heizungsanordnung zum gleichzeitigen Erhitzen einer Mehrzahl an Kohletabletten für einen anschließenden Gebrauch in einer Shisha.

Für den Gebrauch einer Shisha wird gewöhnlicher Weise der Tabak über eine Kohletablette erhitzt. Diese Kohletablette wird gewöhnlicher Weise auf den Shishakopf, in welchem der Tabak eingeführt ist und welcher mit einer Metallfolie, welche eine Anzahl an Durchgangsöffnungen aufweist, bedeckt ist, aufgelegt. Hierzu muss die Kohletablette von Hand zunächst erhitzt werden, welches bevorzugt durch die manuelle Verwendung eines Bunsenbrenners oder dergleichen geschieht. Die Erhitzung mehrerer Kohletabletten kann folglich einen hohen Zeitkonsum in Anspruch nehmen, wenn zum Erhitzen der Kohletabletten ein Bunsenbrenner verwendet wird. In einem Shisha-Cafe kann dies beispielsweise dazu führen, dass bei einem Ansturm von Kunden nicht alle Kunden zeitnah bedient werden können.

Die DE 10 2013 001 052 A1 offenbart eine Vorrichtung zum Anzünden und Durchglühen von Kohle, insbesondere für schwer entzündbare Naturkohle mittels eines kaminartigen Gehäuses, in dem ein elektrisches Heizelement angeordnet ist.

Die DE 20 2013 012 062 U1 offenbart eine Zündvorrichtung, welche mit Hilfe von infraroten Strahlungsquellen und Infrarot-Strahlungsreflektoren ein brennbares Material erwärmt und entzündet, wobei es sich bei dem brennbaren Material insbesondere um Kohle für den Gebrauch in einer Wasserpfeife handelt.

Die US 2006/0081622 A1 offenbart ein Mikrowellenpizzaofen, welcher eine spezielle Einschiebevorrichtung zum einfachen Handhaben der Pizza offenbart.

Die FR 2 686 400 offenbart eine Maschine zum Auftauen und Wiedererwärmen einer in einem Kochbehälter verpackten Tiefkühlkost, wobei darauf geachtet wird, dass eine Temperatur von 140° nicht erreicht wird, um sogenannte Maillard-Reaktionen zu vermeiden.

Die CN 204143615 U offenbart eine Fernsteuerungseinrichtung für eine Wasserpfeife.

Die CN 203454206 offenbart eine Anordnung zur Erwärmung von Kohleplatten, wobei insbesondere Strahlungslöcher in dem oberen Teil des Körpers ausgeprägt sind, um die Kohle zu erwärmen.

Es ist die Aufgabe der vorliegenden Erfindung, eine Heizungsanordnung zum gleichzeitigen Erhitzen einer Mehrzahl an Kohletabletten für einen anschließenden Gebrauch in einer Shisha bereitzustellen.

Diese Aufgabe wird gelöst mit einer Heizungsanordnung gemäß Anspruch 1. Weitere Vorteile und Merkmale der vorliegenden Erfindung ergeben sich aus den abhängigen Ansprüchen.

Erfindungsgemäß umfasst die Heizungsanordnung zum gleichzeitigen Erhitzen einer Mehrzahl an Kohletabletten für einen anschließenden Gebrauch in einer Shisha ein Gehäuse mit einem Gehäusevolumen. Das Gehäusevolumen stellt ein Aufnahmevolumen für die Mehrzahl an gleichzeitig zu erhitzenden Kohletabletten bereit, in dem die Mehrzahl an Kohletabletten einführbar ist. Ferner umfasst die Heizungsanordnung eine elektrische Heizungsvorrichtung, welche mindestens ein Heizelement umfasst, das die Mehrzahl an Kohletabletten zumindest teilweise umgibt, wodurch die Mehrzahl an Kohletabletten gleichzeitig erhitzt werden kann. In vorteilhafter Weise ist die Mehrzahl an Kohletabletten in das Aufnahmevolumen des Gehäuses der Heizungsanordnung einführbar und kann aus diesem Aufnahmevolumen nach dem Erhitzen der Mehrzahl an Kohletabletten wieder entnommen werden. Das Aufnahmevolumen wird bevorzugt durch ein dreidimensionales Gitter bereitgestellt, auf dem die Mehrzahl der Kohletabletten abgelegt wird. Das dreidimensionale Gitter kann beispielsweise quaderförmig oder würfelförmig oder dergleichen ausgebildet sein. Bevorzugt weist das das Aufnahmevolumen definierende Aufnahmegitter eine möglichst große Querschnittsfläche auf, so dass möglichst viele Kohletabletten in der Mehrzahl an Kohletabletten umfasst sein können. Bevorzugt ist das Gitter ein Metallgitter, welches hitzebeständig ist und nur schlecht oxidiert.

In einer bevorzugten Ausführungsform weist die Heizungsvorrichtung der Heizungsanordnung eine Steuerung zum Ansteuern des mindestens einen Heizungselementes auf. Bevorzugt ist das mindestens eine Heizungselement als eine mäanderförmige oder dergleichen verlaufende Heizspirale ausgebildet. Durch einen mäanderförmigen oder dergleichen Verlauf der Heizspirale kann die mindestens eine Heizspirale eine große Fläche mit Wärmeenergie bedienen, d.h. erhitzen.

Gemäß einem bevorzugten Ausführungsbeispiel sind mindestens zwei Heizungselemente vorgesehen, welche die Mehrzahl der gleichzeitig zu erhitzenden Kohletabletten von mindestens zwei Seiten, vorzugsweise gegenüberliegenden Seiten, umgeben. Bevorzugt umgeben die mindestens zwei Heizungselemente jeweils eine der Querschnittsflächen des Aufnahmevolumens bzw. des dreidimensionalen Gitters, in denen die Mehrzahl an Kohletabletten einführbar sind. Hierdurch kann die Mehrzahl an Kohletabletten gleichmäßig und beidseitig erhitzt werden.

Bevorzugt ist ein Umlüfter an dem Gehäuse zum Einführen von Luft, insbesondere von Sauerstoff, angeordnet. Durch den Umlüfter wird Luft in die Heizungsanordnung eingeführt und durch das Aufnahmevolumen geleitet. Der Verbrennungsprozess der Mehrzahl an Kohletabletten, d.h. das Erhitzen, insbesondere der zeitliche Verlauf des Erhitzens, ist durch die Zufuhr von Luft, also einem Sauerstoff enthaltenden Medium, steuerbar. Der Vorteil des Umlüfters liegt darin, dass durch diesen ein Kamineffekt erreicht wird. Bei dem Kamineffekt wird vorliegend Sauerstoff gezielt über die zu erhitzenden Kohletabletten geleitet.

Bevorzugt ist der Umlüfter mit der Heizungsvorrichtung elektrisch verbunden und ist von der Steuerung der Heizungsanordnung ansteuerbar bzw. angesteuert. Dadurch, dass der Umlüfter und die Steuerung elektrisch miteinander verbunden sind, kann die Steuerung der Heizungsanordnung den Umlüfter ansteuern und die Zufuhr an Luft steigern oder beschränken. Die Zufuhr an Luft wird folglich über die Steuerung geregelt.

Gemäß einer bevorzugten Ausführungsform ist mindestens ein Sensor zum Erfassen eines Erhitzungszustandes der eingeführten Mehrzahl an Kohletabletten vorgesehen, wobei der Sensor insbesondere die Temperatur in dem Aufnahmevolumen und/oder der eingeführten Mehrzahl an Kohletabletten erfasst. Bei dem Temperatursensor kann es sich beispielsweise um ein Infrarotsensor oder ein CCD-Modul handeln. Beide Sensoren können berührungslos eine Temperatur erfassen. Durch Erfassen der Temperatur ist der Erhitzungszustand der Mehrzahl an Kohletabletten ermittelbar und ein noch abzuwartendes Zeitintervall, bis die Mehrzahl an Kohletabletten für einen Gebrauch in einer Shisha vorbereitet ist, abschätzbar.

Hierzu werden die vom Sensor erfassten Signale an die Steuerung weitergegeben, welche konfiguriert ist, die Signale auszuwerten und auf Basis der erfassten und/oder ausgewerteten Signale den Umlüfter und/oder das mindestens eine Heizelement anzusteuern. In der Steuerung ist mindestens ein Temperatursollwert für die Mehrzahl an Kohletabletten hinterlegt, welcher für einem anschließenden Gebrauch der Kohletabletten in einer Shisha zu erreichen ist. Insbesondere ist in der Steuerung eine Zeit-Temperatur-Kurve hinterlegt, aus welcher auf Basis der aktuell erreichten Temperatur das noch abzuwartende Zeitintervall bis die Mehrzahl an Kohletabletten erhitzt ist, abgeschätzt werden kann.

Bevorzugt ist in der Steuerung mindestens ein vorgegebener Sollwert, insbesondere für die Temperatur der Kohletabletten und/oder für das Aufnahmevolumen, gespeichert. Bei Unterschreiten oder Überschreiten des mindestens einen Sollwertes steuert die Steuerung den Umlüfter und/oder das mindestens eine Heizelement an. Bei Unterschreiten des Sollwertes, also zu Beginn des Erhitzungsprozesses, werden der Umlüfter und/oder das Heizelement derart angesteuert, dass der Umlüfter eine entsprechend benötigte Luftzufuhr ermöglicht und/oder das mindestens eine Heizelement eine benötigte Wärmeenergie bereitstellt. Bei Erreichen des Sollwertes wird der Umlüfter derart angesteuert, dass die Luftzufuhr reduziert wird, um den Erhitzungsprozess an den Kohletabletten einzuschränken. Ferner kann die Steuerung das Heizelement entsprechend ansteuern, welches daraufhin eine geringere Wärmezufuhr an die Mehrzahl an Kohletabletten bereitstellt.

Bevorzugt ist an dem Gehäuse der Heizungsanordnung ein Bildschirm vorgesehen, welcher den Erhitzungszustand der Mehrzahl an eingeführten Kohletabletten anzeigt, insbesondere ein noch abzuwartendes oder vorgegebenes Zeitintervall anzeigt, bis die Mehrzahl an Kohletabletten für einen anschließenden Gebrauch in einer Shisha nutzbar sind. Das von der Steuerung ermittelte noch abzuwartende Zeitintervall wird für einen Benutzer sichtbar an dem Bildschirm ausgegeben.

Gemäß einem bevorzugten Ausführungsbeispiel ist die Steuerung mit einem Schalter verbunden, welcher bei Schalten bzw. Betätigung bzw. Aktivierung desselben ein Schaltersignal anzeigt und/oder erklingen lässt, wobei das Schalten des Schalters automatisch erfolgt, wenn der Steuerung übermittelt worden ist, dass die Mehrzahl an Kohletabletten für einen anschließenden Gebrauch in einer Shisha nutzbar sind. Bei Umlegen des Schalters kann an dem Bildschirm die Eingabe "fertig" angezeigt werden und/oder der Schalter kann dazu ausgelegt sein, dass bei Schalten des Schalters ein Ton erklingt. Das Anzeigen an dem Monitor und das Erklingen eines Tones können zusammen oder auch nur einzeln erfolgen. Dies hat den Vorteil, dass ein Nutzer die Mehrzahl an Kohletabletten in die Heizungsanordnung einführen kann, und dieses quasi unbeaufsichtigt bis zum anschließenden Gebrauch in einer Shisha erhitzen lassen kann.

Gemäß einem bevorzugten Ausführungsbeispiel weist das Gehäuse ein entfernbares und wieder einführbares Auffangbehältnis zum Auffangen von Kohletablettenresten oder dergleichen auf. Beim Erhitzen der Mehrzahl an Kohletabletten werden gegebenenfalls Aschereste von den Kohletabletten abgegeben, welche von dem Auffangbehältnis aufgefangen werden. Dies hat den Vorteil, dass die Heizungsanordnung in einfacher Weise gereinigt werden kann.

Das Gehäuse ist bevorzugt einteilig oder mehrteilig, insbesondere zweiteilig, ausgebildet. Bei einteiliger Ausbildung des Gehäuses sind die Steuerung und der Umlüfter für einen Nutzer nicht ohne Weiteres zugänglich. Bei einer mindestens zweiteiligen Ausbildung des Gehäuses sind der Umlüfter und die Steuerung für einen Nutzer durch Entfernen eines Teils des Gehäuses zugänglich. Bei einer zweiteiligen Ausbildung des Gehäuses weist das Gehäuse einen Grundkörper und einen Deckel auf. Der Deckel ist in einfacher Weise von dem Grundkörper entfernbar. Dies ermöglicht das Reinigen des Umlüfters nach einem längeren Gebrauch.

Bevorzugt ist an dem Gehäuse ein Katalysator zum Auffangen von Partikeln, welche sich durch das Erhitzen der Mehrzahl an Kohletabletten bilden, angeordnet. Bei zweiteiliger Ausbildung des Gehäuses ist der Katalysator bevorzugt an dem Deckel des Gehäuses angeordnet. Der Katalysator ist über eine Leitung mit dem Aufnahmevolumen in dem Gehäus verbunden. Die Leitung des Katalysators ist bevorzugt als eine Rohrleitung ausgebildet. Bevorzugt ist der Katalysator über dem Aufnahmevolumen der Mehrzahl an Kohletabletten angeordnet, so dass von den Kohletabletten aufzufangende Partikel über die Leitung zum Katalysator geführt werden.

Bevorzugt steht der Katalysator, welcher insbesondere an dem Gehäusedeckel angeordnet ist, mit dem Gehäusevolumen zum Aufnehmen der abgesonderten Partikel in Fluidverbindung. Hierdurch wird die Abgabe an Schadstoffen an die Umgebung verhindert.

In einer bevorzugten Ausführungsform weist das Gehäuse eine Öffnung auf, woran ein Leitungselement, insbesondere ein Flexschlauch, festgelegt oder festlegbar ist, wobei vorzugsweise das Leitungselement das Gehäuse mit einem Lüftungssystem verbindet. Weiterhin bevorzugt weist das Gehäuse zumindest eine weitere Öffnung auf, wobei bevorzugt die weitere Öffnung als Lüftungsschlitz, insbesondere als kiemenartiger Schlitz an den Seitenwänden des Gehäuses, ausgeführt ist, wobei vorzugsweise der Lüftungsschlitz dazu ausgelegt ist einen Luft-und/oder Wärmeaustausch zwischen dem Gehäusevolumen und der Umgebung der Heizungsanordnung durchzuführen. Bei der Öffnung in dem Gehäuse, an welcher ein Leitungselement anordenbar oder angeordnet ist, handelt es sich bevorzugt um eine quadratische oder kreisförmige Öffnung, um einen Flansch oder Rohrverbinder oder jede andere Art von Öffnung, welche geeignet ist, ein Leitungselement, insbesondere einen Flexschlauch, anzubringen. Bevorzugterweise ist das Leitungselement als ein Flexschlauch ausgeführt, jedoch kann das Leitungselement auch als jede andere Art von Schlauch oder Rohr, bspw. Stahlrohr, Alurohr oder Gewebeschlauch, ausgeführt werden, welche dafür geeignet ist, ein Gas zu transportieren. Besonders bevorzugt ist das Leitungselement so angeordnet oder anordenbar, dass es die Öffnung in dem Gehäuse mit einem Lüftungssystem verbindet. Die Verbindung zwischen dem Leitungselement und der Öffnung im Lüftungssystem ist bevorzugt lösbar ausgeführt, insbesondere verschraubt oder verklemmt. Bei dem Lüftungssystem handelt es sich vorzugsweise um ein Lüftungssystem, welches typischerweise in der Gastronomie angewendet wird. In einer bevorzugten Ausführungsform weist das Gehäuse zumindest eine weitere Öffnung auf, welche bevorzugt als ein Lüftungsschlitz ausgeprägt ist. Dabei ist der Lüftungsschlitz vorzugsweise als ein kiemenartiger oder anders umgeformter oder herausgetrennter Schlitz ausgeführt, wobei der Lüftungsschlitz dazu ausgelegt ist, einen Luft-und/oder Wärmeaustausch zu vollziehen. Der Luft-und Wärmeaustausch findet bevorzugt zwischen dem Gehäusevolumen, welche sich in dem Gehäuse befindet, und der atmosphärischen Umgebung der Heizungsanordnung statt. Dabei ist das Gehäusevolumen mit atmosphärischer Luft gefüllt und kann durch den Lüftungsschlitz ausgetauscht werden. Ein Vorteil dieser Ausführungsform ist, dass die austretenden Gase aus dem Gehäuse zielgerichtet durch das Leitungselement in ein Lüftungssystem eingebracht werden können. Ein weiterer Vorteil ist ein ständiger Austausch der Luft und Wärme innerhalb des Gehäusevolumens und durch den Lüftungsschlitz, was dazu führt, dass die elektrischen Steuer-und Regeleinheiten, welche sich innerhalb des Gehäuses befinden, aufgrund der geringeren thermischen Belastung eine längere Lebenszeit aufweisen. In einem bevorzugten Ausführungsbeispiel weist das Gehäuse eine runde Öffnung auf, an die mittels einer Klemmvorrichtung, ein Flexschlauch anlegbar ist und dieser Flexschlauch das Gehäuse, bzw. das Gehäusevolumen, welches sich innerhalb des Gehäuses befindet, mit einem für den Gastronomiebedarf ausgelegten Lüftungssystem verbindet. In einem weiteren Ausführungsbeispiel weist das Gehäuse an zumindest einer Seitenfläche, bevorzugt an zwei seitlichen Seitenflächen, eine Mehrzahl von kiemenartigen Lüftungsschlitzen auf, welche durch ein Trenn-oder Umformverfahren in die Seitenwände eingebracht wurden, wo über die Lüftungsschlitze ein Luft-und Wärmeaustausch stattfinden kann.

Erfindungsgemäß umfasst das Gehäuse ein Aufnahmebehältnis, wobei das Aufnahmebehältnis ein überwiegend abgeschlossenes Volumen bildet, und wobei bevorzugt in dem Aufnahmebehältnis das zumindest eine Heizungselement angeordnet ist, und/oder wobei bevorzugt das Aufnahmebehältnis und das Gehäuse jeweils eine Bedienöffnung aufweisen, wobei vorzugsweise die Bedienöffnungen deckungsgleich ausgeführt sind, sodass das Aufnahmevolumen in das Aufnahmebehältnis einbringbar ist, und/oder wobei vorzugsweise das Aufnahmebehältnis an seiner Außenseite zumindest einen Anschluss aufweist, wobei insbesondere der Anschluss dazu konfiguriert ist, das Heizungselement mit Energie zu versorgen, und/oder wobei bevorzugt das Aufnahmebehältnis einen Sensor aufweist, wobei insbesondere der Sensor dazu konfiguriert ist, die Temperatur in dem Aufnahmebehältnis zu messen. Bei einem Aufnahmebehältnis handelt es sich bevorzugt um eine kubische oder kubisch-ähnliche Anordnung, welche dazu ausgeführt ist, ein Volumen zu bilden, worin erfindungsgemäß heiße Luft bzw. heißes Gas gesammelt und gehalten werden kann. Das Aufnahmebehältnis ist bevorzugt aus einem metallischen und/oder mineralischem Material ausgeführt, wobei das Aufnahmebehältnis ein-oder mehrteilig ausgeführt werden kann, wobei die mehrteilige Ausführungsform bevorzugt geschweißt, geschraubt, geklebt oder geklemmt ist. Das Aufnahmebehältnis ist bevorzugt ein überwiegend abgeschlossenes Volumen Überwiegend bedeutet in dieser Ausführungsform, dass zumindest eine bevorzugt zwei, drei oder vier Öffnungen in den Seitenflächen, Deckel oder Boden vorgesehen sind. Dabei bedeutet überwiegend abgeschlossen auch, dass das überwiegend abgeschlossene Volumen bevorzugt zwischen 1% und 49%, bevorzugt maximal 30%, bevorzugter maximal 20%, seiner Fläche mit Bohrungen und anderen Öffnungen versehen ist. In einer alternativen Ausführungsform kann es auch bedeuten, dass ein überwiegend abgeschlossenes Volumen keinerlei Öffnungen aufweist. In einer bevorzugten Ausführungsform weisen das Aufnahmebehältnis und das Gehäuse jeweils eine Bedienöffnung auf. Die Bedienöffnung ist vorzugsweise als Ausschnitt oder Bohrung oder jegliche andere Form von Geometrie, welche zur Bildung einer Öffnung geeignet ist, ausgeführt. Dabei ist die Bedienöffnung bevorzugt durch ein Schweißverfahren, Wasserschneid- oder Laserschneidverfahren oder jedes andere Verfahren, welches sich unter der Hauptgruppe "Trennen" der DIN 8580 einordnen lässt, gebildet. In einer bevorzugten Ausführungsform sind die Bedienöffnung im Aufnahmebehältnis und die Bedienöffnung in dem Gehäuse deckungsgleich ausgeführt. In dieser Ausführungsform bedeutet deckungsgleich bevorzugt, dass die Kanten des Aufnahmebehältnisses und des Gehäuses kohärent ausgeführt sind. Alternativ können die Umfänge der Kanten der Bedienöffnungen auch unterschiedliche Größen aufweisen. Die deckungsgleiche Ausführung der Bedienöffnung hat den besonderen

Vorteil, dass das Aufnahmevolumen einfach durch die Bedienöffnungen in das Aufnahmebehältnis einbringbar ist. Dabei ist ein besonderer Vorteil dieser Anordnung, dass das Aufnahmevolumen in die Bedienöffnung des Gehäuses eingeführt werden kann ohne eine optische Anvisierung der Bedienöffnung des Aufnahmebehältnisses vorzunehmen. In einer bevorzugten Ausführungsform weist das Aufnahmebehältnis an seiner Außenseite zumindest einen Anschluss auf, der bevorzugt dazu ausgelegt bzw. konfiguriert ist, das zumindest eine Heizungselement mit Energie zu versorgen. Dabei ist der Anschluss bevorzugt so an dem Aufnahmebehältnis angebracht, dass eine einfache und direkte Verbindung zwischen dem Heizungselement und der Energieversorgung hergestellt werden kann. Bevorzugt wird die Verbindung durch einen wärmeresistenten zweiteiligen Gerätestecker gebildet, bevorzugt nach VDE 0623 oder als C16-Stecker ausgeführt. In einer bevorzugten Ausführungsform ist ebenfalls der Anschluss so an dem Aufnahmebehältnis angebracht, dass keine warme Luft aus dem Aufnahmebehältnis austreten kann. Bevorzugterweise wird das Heizungselement durch eine Art von Leitung oder Kabel mit elektrischer Strom versorgt, wobei der Anschluss des Aufnahmebehältnisses so ausgeführt wird, dass das Heizelement mit Energie bzw. Strom versorgt wird, um das Innenvolumen des Aufnahmebehältnisses zu erhitzen. In einer bevorzugten Ausführungsform weist das Aufnahmebehältnis einen Sensor auf, welcher bevorzugt an Seitenwand, Deckel oder Boden des Aufnahmebehältnisses angebracht ist, um eine Temperatur im Aufnahmebehältnis zu messen, bevorzugt in einer Art und Weise, sodass die Temperatur mittels des Sensors von einer elektrischen Steuereinheit ausgewertet werden kann. Vorteilhafterweise ist der Sensor an oder in dem Aufnahmebehältnis so angeordnet, dass die gemessene Temperatur repräsentativ für den Temperaturmittelwert im Aufnahmebehältnis steht. Alternativ kann der Sensor jedoch auch an jeder anderen Position innerhalb oder anliegend am Aufnahmebehälter angebracht werden.

In einer bevorzugten Ausführungsform wird das Aufnahmevolumen durch die Bedienöffnung des Gehäuses, insbesondere eine Bedienöffnung an einer Seitenwand des Gehäuses, und/oder wobei das Aufnahmevolumen durch die Bedienöffnung des Aufnahmebehältnisses parallel zu einer Aufstellebene der Heizungsanordnung eingeführt. Bevorzugterweise weist das Gehäuse eine Bedienöffnung auf, wobei die Bedienöffnung dazu ausgelegt ist, dass ein Aufnahmevolumen in das Gehäuse eingeführt werden kann. In einer alternativen Ausführungsform weisen sowohl das Gehäuse als auch das Aufnahmebehältnis eine Bedienöffnung auf, die so angeordnet sind, dass ein Aufnahmevolumen, in welchem sich eine Mehrzahl an Kohletabletten befindet, durch die beiden Bedienöffnungen hindurch geführt werden kann. Bevorzugterweise wird das Aufnahmevolumen parallel zu einer Aufstellebene der Heizungsordnung in das Gehäuse bzw. des Aufnahmebehältnis eingeführt und dabei ist die Aufstellebene bevorzugt eine Ebene, worauf die Heizungseinheit gestellt wird. Die Aufstellebene ist bevorzugterweise parallel zum Boden. In anderen Worten kann man somit das Aufnahmevolumen mit der Mehrzahl an Kohletabletten horizontal bzw. parallel zum Boden in das Gehäuse bzw. Aufnahmebehältnis einführen.

Bevorzugterweise sind eine Vielzahl an Ebenen in dem Gehäuse und/oder dem Aufnahmebehältnis bildbar, wobei bevorzugt auf jeder Ebene zumindest ein Aufnahmevolumen, insbesondere für jede Ebene ein separates Aufnahmevolumen, anordenbar ist, wobei vorzugsweise zwischen zwei Ebenen zumindest ein Heizungselement anordenbar ist. In einer bevorzugten Ausführungsform weist das Gehäuse eine Vielzahl an Ebenen auf, wobei eine Vielzahl bevorzugterweise zwischen 1 und 20 Ebenen ist. Bevorzugterweise sind die Ebenen parallel übereinander angeordnet in einem bevorzugten Abstand zwischen 1 und 25cm, jedoch bevorzugt in einem Abstand, wobei das Aufnahmevolumen ohne Probleme zwischen die beiden Ebenen eingeführt werden kann. In einer bevorzugten Ausführungsform ist jeweils zwischen zwei Ebenen ein Aufnahmevolumen anbringbar oder angebracht bzw. einschiebbar, wobei auf jeder Ebene ein Aufnahmevolumen angebracht werden kann. In einer bevorzugten Ausführungsform wird für jede Ebene zumindest ein Heizungselement angeordnet und bevorzugt in einer Art und Weise angeordnet, dass das Heizungselement das Aufnahmevolumen erhitzt. In einer beispielhaften Ausführungsform hat das Gehäuse 10 Ebenen, wobei auf jeder Ebene ein Auffangvolumen angeordnet ist, und wo unterhalb jedes Aufnahmevolumens ein Heizungselement angeordnet ist, wobei an dem 10. bzw. höchsten Aufnahmevolumen auch oberhalb des Aufnahmevolumens ein Heizungselement angeordnet ist. Der Vorteil bei dieser Ausführungsform ist, dass eine Vielzahl an Aufnahmevolumen mit Kohletabletten gleichzeitig erhitzt werden können.

In einer bevorzugten Ausführungsform weist das Aufnahmebehältnis eine Öffnung auf, wobei bevorzugt an der Öffnung eine Leitungseinheit, insbesondere ein Schornstein, festlegbar ist, und/oder wobei das Gehäuse eine zusätzliche Öffnung aufweist, um die Leitungseinheit durch die zusätzliche Öffnung hindurchzuführen, wobei vorzugsweise an und/oder in der Leitungseinheit eine Gasreinigungseinheit, insbesondere ein Katalysator anordenbar ist, wobei insbesondere Gase die aus der Gasreinigungseinheit austreten, durch eine weitere Leitungseinheit aufgefangen werden, wobei vorzugsweise die aufgefangenen Gase durch die weitere Leitungseinheit dem Aufnahmebehältnis wieder zugeführt werden. Bevorzugt weist das Aufnahmebehältnis eine Öffnung auf, wobei die Öffnung durch eine runde, eckige oder andere geometrische Form oder als Flansch oder Rohrverbinder gebildet werden kann, wobei die Öffnung bevorzugt durch ein Schneid-oder Stanzverfahren in das Aufnahmebehältnis eingebracht wird, oder jede andere Form von Fertigungsverfahren, wenn es sich in die Hauptgruppe "Trennen" der DIN8580 einordnen lässt. Bevorzugterweise lässt sich an der Öffnung eine Leitungseinheit festlegen bzw. anbringen, insbesondere ein Schornstein, wobei die Leitungseinheit an der Öffnung befestigt wird bevorzugt durch schrauben, klemmen, kleben oder schweißen. Bevorzugt weist das Gehäuse eine zusätzliche Öffnung auf, wobei die zusätzliche Öffnung in das Gehäuse bevorzugterweise geschnitten, gestanzt, gefräst oder durch ein anderes Fertigungsverfahren der Hauptgruppe "Trennen" der DIN8580 eingebracht werden kann. Bevorzugterweise ist dabei die zusätzliche Öffnung so ausgelegt, dass die Leitungseinheit durch die zusätzliche Öffnung hindurchgeführt werden kann und bevorzugt dabei die Verbindungsstelle zwischen der zusätzliche Öffnung und der Leitungseinheit abdichtet. In einer alternativen Ausführungsform weist die Leitungseinheit innerhalb oder außerhalb der Leitungseinheit eine Gasreinigungseinheit auf, wobei bevorzugt die Gasreinigungseinheit ein Katalysator ist. Bevorzugterweise weist die Gasreinigungseinheit Elemente auf, welche Partikelstaub und ähnliche Festkörper aus Gasen filtern. In einer bevorzugten Ausführungsform weist die Gasreinigungseinheit weitere Elemente auf, die dazu ausgelegt sind, auch bestimmte Gase aus der Leitungseinheit herauszufiltern bzw. so zu verändern, dass sie für Menschen keine schädliche Wirkung haben. In einer bevorzugten Ausführungsform ist eine weitere Leitungseinheit an der Gasreinigungseinheit anbringbar, wobei die weitere Leitungseinheit an die Gasreinigungseinheit geschraubt, geschweißt oder geklemmt sein kann. Bevorzugt ist die weitere Leitungseinheit dazu ausgelegt, die aus der Gasreinigungseinheit austretenden Gase aufzufangen, und bevorzugt durch ein Festlegen der weiteren Leitungseinheit an dem Aufnahmebehältnis die aufgefangenen Gase wieder zurück in das Aufnahmebehältnis zu leiten. Der Vorteil dieser Ausführungsform ist, dass die Wärmeenergie der austretenden Gase wieder der Heizungsanordnung zugeführt wird, sodass weniger Hitze durch das zumindest eine Heizungselement erzeugt werden muss. Bevorzugterweise weist dazu das Gehäuse eine zusätzliche Öffnung auf, wo die weitere Leitungseinheit hindurchgeführt werden kann, und bevorzugterweise weist das Aufnahmebehältnis eine weitere zusätzliche Öffnung auf, wo die weitere Leitungseinheit angebracht werden kann, bevorzugt an dem Aufnahmebehältnis festgelegt durch eines der Verfahren Schweißen, Schrauben, Kleben oder Klemmen.

In einer alternativen Ausführungsform ist die Außenseite des Gehäuses und/oder die Außenseite des Aufnahmebehältnis mit einer Isolierschicht versehen, wobei bevorzugt die Isolierschicht in dem Gehäuse und/oder dem Aufnahmebehältnis integriert ist, wobei vorzugsweise die Isolierschicht bevorzugt aus einem Gestein oder Mineral gebildet wird. In einer bevorzugten Ausführungsform ist die Außenseite des Gehäuses bzw. die Außenseite des Aufnahmebehälters mit einer Isolierschicht versehen. Dabei kann die Isolierschicht auch die Außenseite des Gehäuses bilden bzw. ist die Isolierschicht in dem Gehäuse vollständig integriert. In einer alternativen Ausführungsform ersetzt die Isolierschicht, das Gehäuse und/oder das Aufnahmebehältnis vollständig. In einer bevorzugten Ausführungsform wird die Isolierschicht aus einem Gestein oder Mineral, bspw. Schamott, Cordierit, Keramik oder Speckstein, gebildet. Alternativ kann die Isolierschicht aber aus jedem anderen Material gebildet werden, welches dazu geeignet ist, Wärme innerhalb eines geschlossenen Volumens zu halten, in bevorzugten Ausführungsformen jede Art von Kunststoff oder anderem Material, welches schlecht Wärme leitet, wie beispielsweise Teflon.

Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass einzelne in den jeweiligen Figuren gezeigte Ausführungsformen Merkmale aufweisen können, die in anderen Ausführungsformen zum Einsatz gelangen können, auch wenn diese nicht explizit genannt sind, uns sofern dies nicht aufgrund technischer Gegebenheiten und explizit ausgeschlossen wurde. Es zeigen:
- Figur 1: den Aufbau der Heizungsanordnung mit einem einzuführenden Aufnahmevolumen,
- Figur 2: eine in der Heizungsanordnung verbaute Heizungsvorrichtung,
- Figur 3: einen Deckel des Gehäuses der Heizungsanordnung mit einem angebauten Katalysator, und
- Figur 4: ein Schaltbild mit elektrischen Komponenten, welche von der Steuerung ansteuerbar sind.

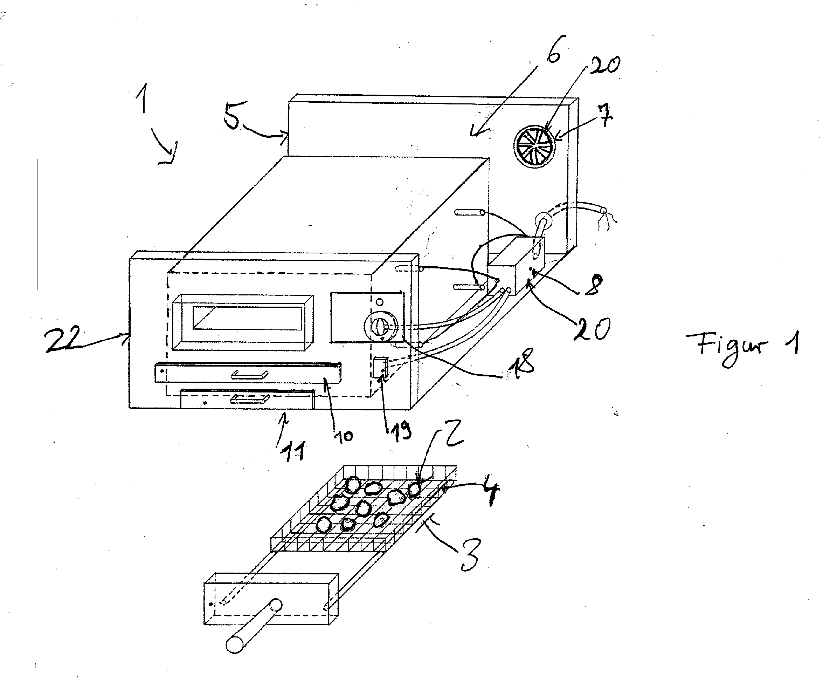

Die vorliegende Erfindung wird nachfolgend anhand eines Ausführungsbeispiels in Zusammenschau der Figuren 1 bis 4 beschrieben.

**Figur 1** zeigt eine Heizungsanordnung 1, in welcher eine Mehrzahl an Kohletabletten 2 einführbar ist. Die Mehrzahl an Kohletabletten 2 ist auf einem Gitter 3 angeordnet, wobei das Gitter 3 ein Aufnahmevolumen 4 definiert. Gemäß Figur 1 ist das Gitter 3 quaderförmig ausgebildet. Es ist jedoch denkbar, dass das Gitter 3 eine andere Form aufweist, wie beispielsweise würfelförmig, zylinderförmig oder dergleichen. Wesentlich ist, dass das Gitter 3 eine möglichst große Auflagefläche für die Mehrzahl an Kohletabletten 2 bereitstellt. Die Heizungsanordnung umfasst einen Umlüfter 7, welcher mit einer Steuerung 8 elektrisch verbunden ist. Ferner ist die Steuerung 8 mit dem mindestens einen Heizungselement 9 verbunden. Die Steuerung 8 ist konfiguriert, sowohl den Umlüfter 7 als auch das mindestens eine Heizungselement 9 anzusteuern.

Die Heizungsanordnung 1 weist in dem Gehäusevolumen 6 ein Aufnahmebehältnis 12 auf, in dem das mindestens eine Heizungselement 9 aufgenommen ist. Gemäß Figur 1 sind zwei mäanderförmig laufende Heizspiralen vorgesehen, welche das Aufnahmevolumen 4 von mindestens zwei Seiten umgeben. Die mindestens zwei Heizungselemente sind dabei derart angeordnet, dass sie das Gitter 3 entlang der Querschnittsflächen des Gitters 3 zumindestens teilweise, vorzugsweise vollständig, umgeben. Die Heizungselemente 9 sind gemäß Figur 1 jeweils einteilig ausgebildet. Die Heizungselemente können jedoch auch mehrteilig ausgebildet sein oder die Heizungselemente können eine von dem mäanderförmigen Verlauf andere Verlaufsform aufweisen, wie beispielsweise spiralförmig, geradlinig, gitterartig oder dergleichen. Die Heizungsanordnung 1 weist ferner ein Auffangbehältnis 10 und/oder optional ein weiteres Auffangbehältnis 11 zum Auffangen der von der Mehrzahl an Kohletabletten abfallenden Partikel, insbesondere Asche. Durch die Auffangbehältnisse 11 und/oder 10 kann die Heizungsanordnung schnell und einfach gereinigt werden.

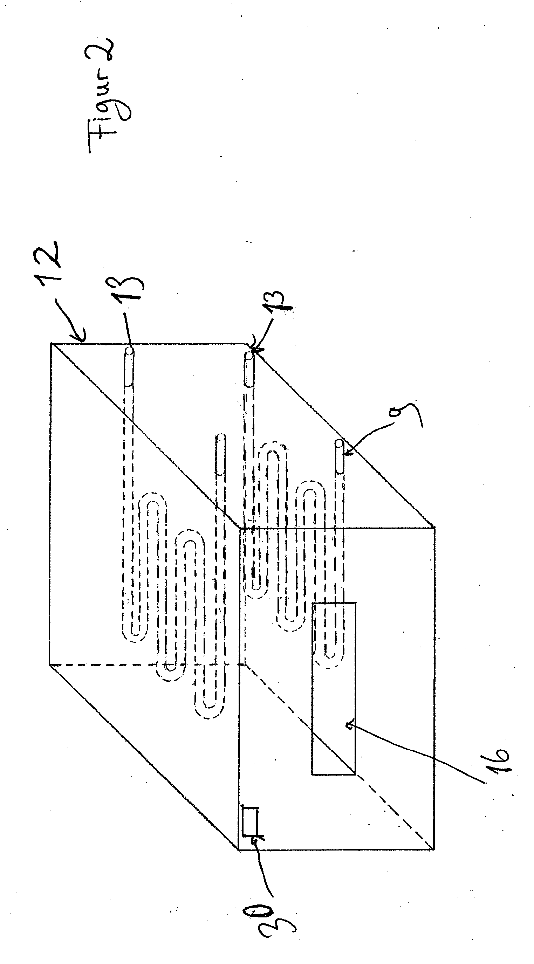

**Figur 2** zeigt ein Aufnahmebehältnis 12 zur Aufnahme des mindestens einen Heizungselements 9. Das Aufnahmebehältnis 12 ist in dem Gehäuse 5 der Heizungsanordnung 1 angeordnet und ist gegenüber dem Gehäusevolumen 6 thermisch isoliert. Die Außenwandung des Aufnahmebehältnisses 12 ist vorzugsweise mit einer hitzebeständigen Isolationsschicht ausgebildet, insbesondere beschichtet. Aus dem Aufnahmebehältnis 12 heraus führen Anschlussleitungen 13 der zwei dargestellten Heizungselemente 9 heraus, welche mit der Steuerung 8 elektrisch verbunden sind. Die Steuerung 8 versorgt das mindestens eine Heizungselement 9 mit elektrischer Energie, vorzugsweise mit Strom. Das Aufnahmebehältnis 12 weist eine Durchgangsöffnung 16 zum Einführen des Gitters 3 auf. Die Aufnahmeöffnung 16 ist komplementär zu der Querschnittsfläche des Aufnahmevolumens 4 ausgebildet, mit welcher das Gitter 3 bzw. dessen Aufnahmevolumen 4 in das Aufnahmebehältnis 12 eingeführt wird. An dem Gehäuse 5 der Heizungsanordnung 1 ist ein Bildschirm 18 vorgesehen, sowie ein Druckknopf 19, mit welchem die Heizungsanordnung 1 einschaltbar ist. Die Heizungsvorrichtung 20 der Heizungsanordnung 1 umfasst die Steuerung 8, den Umlüfter 7 und das mindestens eine Heizungselement 9.

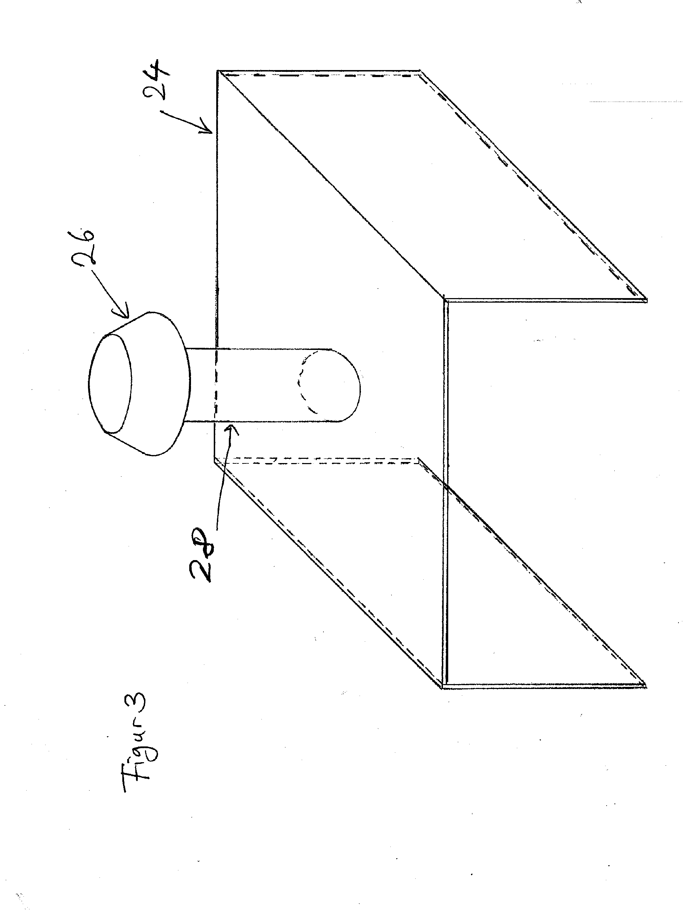

Ferner ist die Heizungsanordnung 1 gemäß **Figuren 1** **und** **3** zweiteilig ausgebildet. Die Heizungsanordnung 1 umfasst einen Grundkörper 22, auf welchem ein Deckel 24 aufsetzbar und wieder entfernbar ist. Es ist jedoch denkbar, dass die Heizungsanordnung mit einem einteiligen Gehäuse 5 ausgebildet ist. Gemäß Figur 3 ist auf dem Deckel 24 ein Katalysator 26 angebracht. Der Katalysator 26 ist für die Aufnahme von Partikeln von der Mehrzahl an Kohletabletten ausgebildet. Der Katalysator 26 weist gemäß Figur 3 eine zylindrische Form 28 auf, welche als Rohrleitung für die Partikelabfuhr dient. Der Deckel 24 ist komplementär zu dem Grundkörper 22 ausgebildet, d.h. der Deckel 24 kann in eine Führung (nicht dargestellt) des Grundkörpers 22 eingeführt werden.

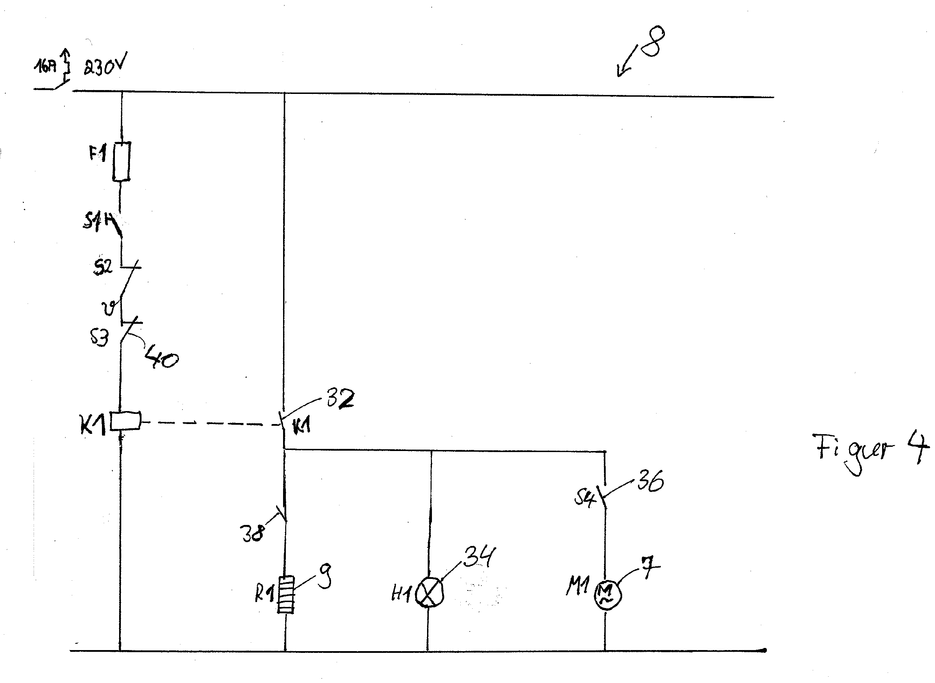

**Figur 4** zeigt ein Schaltbild der Steuerung 8, gemäß welcher die Steuerung 8 einerseits den Umlüfter 7 und andererseits das mindestens eine Heizelement 9 ansteuern kann. Die Steuerung 8 ist dazu ausgebildet, den Umlüfter 7 und das mindestens eine Heizelement 9 gemäß einem vorgegebenen Verlauf anzusteuern. Die Heizungsanordnung 1 ist ferner mit mindestens einem Sensor 30 ausgebildet, wobei der Sensor 30 vorzugsweise in dem Aufnahmebehältnis 12 angeordnet ist. Der Sensor 30 detektiert die Temperatur des mindestens einen Heizelementes 9 und/oder die Temperatur in dem Aufnahmevolumen 4. Der Sensor 30 weist zudem eine hitzebeständige Schutzschicht auf. Der mindestens eine Sensor 30 ist beispielsweise ein Infrarotsensor, ein CCD-Modul, oder dergleichen. Ferner ist es denkbar, dass der mindestens eine Sensor 30 außerhalb des Aufnahmebehältnisses 12 angeordnet ist, vorzugsweise auf einer Außenwandung des Aufnahmebehältnisses 12. Die Auflagefläche des Sensors 30 auf dem Auffangbehältnis 12 ist vorzugsweise ohne Isolierung ausgebildet. Der mindestens eine Sensor 30 gibt das erfasste Signal, insbesondere das Temperatursignal, an die Steuerung 8 weiter, wobei die Steuerung 8 konfiguriert ist, die Signale des Sensors 30 auszuwerten und auf Basis der erfassten und/oder ausgewerteten Signale den Umlüfter 7 und/oder das mindestens eine Heizelement 9 anzusteuern. In der Steuerung 8 ist mindestens ein vorgegebener Sollwert, insbesondere Solltemperaturwert, hinterlegt. Der Sollwert ist beispielsweise eine Mindesttemperatur, welche von der Mehrzahl an Kohletabletten zu erreichen ist. Der mindestens eine vorgegebene Sollwert kann auch eine Temperatur des Aufnahmevolumens 4 sein. Bei Unterschreiten des mindestens einen Sollwerts ist die Steuerung 8 dazu ausgebildet, den Umlüfter 7 und/oder das mindestens eine Heizelement 9 anzusteuern, so dass durch den Umlüfter 7 die Zufuhr an Luft, d.h. Sauerstoff, eingestellt, insbesondere erhöht, werden kann. Ferner ist die Steuerung 8 dazu ausgebildet, das mindestens eine Heizelement 9 mit Energie zu versorgen, d.h. insbesondere einen erhöhten Strombedarf bereitzustellen. Bei Erreichen des mindestens einen vorgegebenen Sollwertes oder bei Überschreiten des mindestens einen vorgegebenen Sollwertes ist die Steuerung 8 dazu ausgebildet, die Energiezufuhr des mindestens einen Heizelementes 9 zu reduzieren und gegebenenfalls die Zufuhr an Luft über den Umlüfter 7 zu reduzieren. Bei Erreichen des mindestens einen Sollwertes, welches bedeutet, dass die Mehrzahl an Kohletabletten für den anschließenden Gebrauch in einer Shisha nutzbar sind, wird ein Schalter 32 geschalten, so dass an dem Bildschirm 18 ein akustisches Signal oder ein optisches Signal anzeigt wird, welches einem Nutzer signalisiert, dass die Mehrzahl an zu erhitzenden Kohletabletten 2 eine Mindesttemperatur, d.h. den vorgegebenen Sollwert, erreicht haben. Ist die Sollwerttemperatur noch nicht erreicht, wird an dem Display 18 einem Nutzer ein noch abzuwartendes Zeitintervall angezeigt, bis die Mehrzahl an Kohletabletten für einen anschließenden Gebrauch in einer Shisha nutzbar ist. Hierfür ist in der Steuerung 8 eine Zeit-Temperatur-Kurve hinterlegt, gemäß welcher ein noch abzuwartendes Zeitintervall abschätzbar ist. Die Steuerung 8 ist ausgebildet, den Erhitzungszustand der Mehrzahl an eingeführten Kohletabletten 2 zu ermitteln. Hierzu wertet die Steuerung 8 die von dem mindestens einen Sensor 30 übermittelten Signale aus.

In dem Schaltbild gemäß Figur 4 ist eine Betriebsleuchte 34 zu sehen, welche bei Einschalten der Heizungsanordnung 1 über den Druckknopf 19 aufleuchtet, um anzuzeigen, dass die Heizungsanordnung funktionsfähig ist. Gemäß Schaltbild ist der Umlüfter 7 mit einem Schalter 36 in Reihe geschaltet, während das mindestens eine Heizelement 9 mit einem Schalter 38 in Reihe geschaltet ist. Ferner ist das mindestens eine Heizelement 9 mit einem Thermostatschalter 40 geschalten. Die Steuerung 8 ist dazu ausgebildet, die Schalter 36, 38, 40, 32 auf Basis eines ermittelten Erhitzungszustandes der Anzahl an Kohletabletten entsprechend zu schalten.

### Bezugszeichen:

- 1: Heizungsanordnung
- 2: Mehrzahl an Kohletabletten
- 3: Gitter
- 4: Aufnahmevolumen
- 5: Gehäuse
- 6: Gehäusevolumen
- 7: Umlüfter
- 8: Steuerung
- 9: Heizungselement
- 10: Auffangbehältnis
- 11: Auffangbehältnis
- 12: Aufnahmebehältnis
- 13: Anschluss
- 16: Durchgangsöffnung
- 18: Bildschirm
- 19: Druckknopf
- 20: Heizungsvorrichtung
- 22: Grundkörper
- 24: Deckel
- 26: Katalysator
- 28: Zylindrische Rohrleitung
- 30: Sensor
- 32: Schalter
- 34: Betriebsleuchte
- 36: Umlüfterschalter
- 38: Heizelementschalter
- 40: Thermostatschalter

## Patentansprüche

1. Heizungsanordnung zum gleichzeitigen Erhitzen einer Mehrzahl an Kohletabletten für einen anschließenden Gebrauch in einer Shisha, wobei die Heizungsanordnung (1) ein Gehäuse (5) mit einem Gehäusevolumen (6) umfasst, welches ein Aufnahmevolumen (4) für die Mehrzahl an gleichzeitig zu erhitzenden Kohletabletten bereitstellt, in dem die Mehrzahl an Kohletabletten (2) einführbar sind, und
wobei die Heizungsanordnung (1) eine elektrische Heizungsvorrichtung (20) umfasst, welche mindestens ein Heizungselement (9), dass die Mehrzahl an Kohletabletten (2) zumindest teilweise umgibt, zum gleichzeitigen Erhitzen der Mehrzahl an Kohletabletten (2), aufweist, **dadurch gekennzeichnet, dass** das Gehäuse (5) ein Aufnahmebehältnis (12) umfasst, wobei das Aufnahmebehältnis (12) ein überwiegend abgeschlossenes Volumen bildet, worin heiße Luft bzw. heißes Gas gesammelt und gehalten werden kann.

2. Heizungsanordnung nach Anspruch 1, wobei die Heizungsvorrichtung (20) eine Steuerung (8) zum Ansteuern des mindestens einen Heizungselementes (9) umfasst.

3. Heizungsanordnung nach einem der vorhergehenden Ansprüche, wobei mindestens zwei Heizungselemente (9) vorgesehen sind, welche die Mehrzahl an gleichzeitig zu erhitzenden Kohletabletten von mindesten zwei Seiten umgeben.

4. Heizungsanordnung nach einem der vorhergehenden Ansprüche, wobei ein Umlüfter (7) an dem Gehäuse (5) zum Einführen von Luft, insbesondere Sauerstoff, angeordnet ist.

5. Heizungsanordnung nach einem der vorhergehenden Ansprüche, wobei mindestens ein Sensor (30) zum Erfassen eines Erhitzungszustandes der eingeführten Mehrzahl an Kohletabletten (2) vorgesehen ist, wobei der Sensor (30) insbesondere eine Temperatur in dem Aufnahmevolumen (4) und/oder der eingeführten Mehrzahl an Kohletabletten (2) erfasst.

6. Heizungsanordnung nach Anspruch 2 oder 5, wobei der Sensor (30) die erfasste Temperatur an die Steuerung (8) gibt, welche konfiguriert ist, die Temperatur auszuwerten und auf Basis der erfassten und/oder ausgewerteten Temperatur den Umlüfter (7) und/oder das mindestens eine Heizelement anzusteuern.

7. Heizungsanordnung nach Anspruch 2, 5 oder 6, wobei in der Steuerung (8) mindestens ein vorgegebener Sollwert, insbesondere für die Temperatur der Mehrzahl an Kohletabletten (2) und/oder für das Aufnahmevolumen (4), gespeichert ist, und die Steuerung (8) bei Unterschreiten oder Überschreiten des mindestens einen Sollwerts den Umlüfter (7) und/oder das mindestens eine Heizelement ansteuert.

8. Heizungsanordnung nach Anspruch 5, wobei an dem Gehäuse (5) ein Bildschirm (18) vorgesehen ist, welcher den Erhitzungszustand der eingeführten Mehrzahl an Kohletabletten (2) anzeigt, insbesondere ein noch abzuwartendes oder vorgegebenes Zeitintervall anzeigt.

9. Heizungsanordnung nach einem der vorhergehenden Ansprüche, zumindest Anspruch 2, wobei die Steuerung (8) mit einem Schalter (32) verbunden ist, welcher bei Betätigung ein Schaltersignal anzeigt und/oder erklingen lässt, wobei das Schalten des Schalters (32) erfolgt, wenn der Steuerung (8) übermittelt worden ist, dass die Mehrzahl an Kohletabletten (2) vorzugsweise für einen anschließenden Gebrauch in einer Shisha nutzbar sind.

10. Heizungsanordnung nach einem der vorhergehenden Ansprüche, wobei das Gehäuse (5) eine Öffnung aufweist, woran ein Leitungselement, insbesondere ein Flexschlauch, festlegbar ist, wobei vorzugsweise das Leitungselement das Gehäuse (5) mit einem Lüftungssystem verbindet, und/oder wobei das Gehäuse (5) zumindest eine weitere Öffnung aufweist, wobei bevorzugt die weitere Öffnung als Lüftungsschlitz, insbesondere als kiemenartiger Schlitz an den Seitenwänden des Gehäuses (5), ausgeführt ist, wobei vorzugsweise der Lüftungsschlitz dazu ausgelegt ist einen Luft- und/oder Wärmeaustausch zwischen dem Gehäusevolumen (6) und der Umgebung der Heizungsanordnung (1) durchzuführen.

11. Heizungsanordnung nach einem der vorherigen Ansprüche, wobei bevorzugt in dem Aufnahmebehältnis (12) das zumindest eine Heizungselement (9) angeordnet ist, wobei bevorzugt das Aufnahmebehältnis (12) und das Gehäuse (5) jeweils eine Bedienöffnung aufweisen, wobei vorzugsweise die Bedienöffnungen deckungsgleich ausgeführt sind, sodass das Aufnahmevolumen (4) in das Aufnahmebehältnis (12) einbringbar ist, wobei vorzugsweise das Aufnahmebehältnis (12) an seiner Außenseite zumindest einen Anschluss (13) aufweist, wobei insbesondere der Anschluss (13) dazu konfiguriert ist, das Heizungselement (9) mit Energie zu versorgen, wobei bevorzugt das Aufnahmebehältnis (12) einen Sensor (30) aufweist, wobei insbesondere der Sensor (30) dazu konfiguriert ist, die Temperatur in dem Aufnahmebehältnis (12) zu messen.

12. Heizungsanordnung nach einem der vorherigen Ansprüche, wobei das Aufnahmevolumen (4) durch die Bedienöffnung des Gehäuses (5), insbesondere eine Bedienöffnung an einer Seitenwand des Gehäuses (5), und/oder wobei das Aufnahmevolumen (4) durch die Bedienöffnung des Aufnahmebehältnisses (12) parallel zu einer Aufstellebene der Heizungsanordnung (1) eingeführt wird.

13. Heizungsanordnung nach einem der vorhergehenden Ansprüche, wobei eine Vielzahl an Ebenen in dem Gehäuse (5) und/oder dem Aufnahmebehältnis (12) bildbar sind, wobei bevorzugt auf jeder Ebene zumindest ein Aufnahmevolumen (4), insbesondere für jede Ebene ein separates Aufnahmevolumen (4), anordenbar ist, wobei vorzugsweise zwischen zwei Ebenen zumindest ein Heizungselement (9) anordenbar ist.

14. Heizungsanordnung nach einem der vorhergehenden Ansprüche, wobei das Aufnahmebehältnis (12) eine Öffnung aufweist, wobei bevorzugt an der Öffnung eine Leitungseinheit, insbesondere ein Schornstein, festlegbar ist, und/oder wobei das Gehäuse (5) eine zusätzliche Öffnung aufweist, um die Leitungseinheit durch die zusätzliche Öffnung hindurchzuführen, wobei vorzugsweise an und/oder in der Leitungseinheit eine Gasreinigungseinheit, insbesondere ein Katalysator anordenbar ist, wobei insbesondere Gase die aus der Gasreinigungseinheit austreten, durch eine weitere Leitungseinheit aufgefangen werden, wobei vorzugsweise die aufgefangenen Gase durch die weitere Leitungseinheit dem Aufnahmebehältnis (12) wieder zugeführt werden.

15. Heizungsanordnung nach einem der vorhergehenden Ansprüche, wobei die Außenseite des Gehäuses (5) und/oder die Außenseite des Aufnahmebehältnis (12) mit einer Isolierschicht versehen ist, wobei bevorzugt die Isolierschicht in dem Gehäuse (5) und/oder dem Aufnahmebehältnis (12) integriert ist, wobei vorzugsweise die Isolierschicht bevorzugt aus einem Gestein oder Mineral gebildet wird.

## Claims

1. A heating arrangement for simultaneously heating a plurality of charcoal tablets for subsequent use in a shisha,
wherein the heating arrangement (1) comprises a housing (5) having a housing volume (6) providing a holding volume (4) for the plurality of charcoal tablets to be simultaneously heated, in which the plurality of charcoal tablets (2) are insertable, and
wherein the heating arrangement (1) comprises an electric heating device (20) having at least one heating element (9) at least partially surrounding the plurality of charcoal tablets (2) for simultaneously heating the plurality of charcoal tablets (2),
**characterized in that**
said housing (5) comprises a holding container (12), said holding container (12) forming a predominantly enclosed volume wherein hot air or hot gas can be collected and retained.

2. The heating arrangement according to claim 1, wherein the heating device (20) comprises a controller (8) for controlling the at least one heating element (9).

3. The heating arrangement according to any one of the preceding claims, wherein at least two heating elements (9) are provided, which surround the plurality of charcoal tablets to be heated simultaneously from at least two sides.

4. The heating arrangement according to any one of the preceding claims, wherein a circulation fan (7) is arranged on the housing (5) for introducing air, in particular oxygen.

5. The heating arrangement according to any one of the preceding claims wherein at least one sensor (30) is provided for detecting a heating state of the inserted plurality of charcoal tablets (2), wherein the sensor (30) detects in particular a temperature in the holding volume (4) and/or the inserted plurality of charcoal tablets (2).

6. The heating arrangement according to claim 2 or 5, wherein the sensor (30) gives the detected temperature to the controller (8), which is configured to evaluate the temperature and to control the circulation fan (7) and/or the at least one heating element on the basis of the detected and/or evaluated temperature.

7. The heating arrangement according to claim 2, 5 or 6, wherein at least one predetermined setpoint value, in particular for the temperature of the plurality of charcoal tablets (2) and/or for the holding volume (4), is stored in the controller (8), and the controller (8) triggers the circulating fan (7) and/or the at least one heating element when the temperature falls below or exceeds the at least one setpoint value.

8. The heating arrangement according to claim 5, wherein a display screen (18) is provided on the housing (5), which displays the heating state of the inserted plurality of charcoal tablets (2), in particular displays a time interval still to be waited for or a predetermined time interval.

9. The heating arrangement according to any one of the preceding claims, at least claim 2, wherein the controller (8) is connected to a switch (32) which, when actuated, displays and/or sounds a switch signal, the switching of the switch (32) taking place when it has been communicated to the controller (8) that the plurality of charcoal tablets (2) are preferably usable for subsequent use in a shisha.

10. The heating arrangement according to any one of the preceding claims, wherein the housing (5) has an opening to which a conduit element, in particular a flexible hose, can be fixed, wherein preferably the conduit element connects the housing (5) to a ventilation system, and/or wherein the housing (5) has at least one further opening, wherein preferably the further opening is designed as a ventilation slot, in particular as a gill-like slot on the side walls of the housing (5), wherein preferably the ventilation slot is designed to perform an air and/or heat exchange between the housing volume (6) and the environment of the heating arrangement (1).

11. The heating arrangement according to any one of the previous claims, wherein preferably the at least one heating element (9) is arranged in the holding container (12), wherein preferably the holding container (12) and the housing (5) each have an operating opening, wherein preferably the operating openings are designed to be congruent so that the holding volume (4) can be inserted into the holding container (12), wherein preferably the holding container (12) has at least one connection (13) on its outside, wherein in particular the connection (13) is configured to supply the heating element (9) with energy, wherein preferably the holding container (12) has a sensor (30), wherein in particular the sensor (30) is configured to measure the temperature in the holding container (12).

12. The heating arrangement according to any one of the previous claims, wherein the holding volume (4) is inserted through the operating opening of the housing (5), in particular an operating opening on a side wall of the housing (5), and/or wherein the holding volume (4) is inserted through the operating opening of the holding container (12) parallel to an installation plane of the heating arrangement (1).

13. The heating arrangement according to any one of the preceding claims, wherein a plurality of planes can be formed in the housing (5) and/or the holding container (12), wherein preferably at least one holding volume (4) can be arranged on each plane, in particular a separate holding volume (4) for each plane, wherein preferably at least one heating element (9) can be arranged between two planes.

14. The heating arrangement according to any one of the preceding claims, wherein the holding volume (12) has an opening, wherein preferably a line unit, in particular a chimney, can be fixed to the opening, and/or wherein the housing (5) has an additional opening in order to guide the conduit unit through the additional opening, wherein a gas purification unit, in particular a catalyst, can preferably be arranged on and/or in the conduit unit, wherein in particular gases which emerge from the gas purification unit are collected by a further conduit unit, wherein preferably the collected gases are fed back to the holding container (12) through the further conduit unit.

15. The heating arrangement according to any one of the preceding claims, wherein the outside of the housing (5) and/or the outside of the holding container (12) is provided with an insulating layer, wherein preferably the insulating layer is integrated in the housing (5) and/or the holding container (12), wherein preferably the insulating layer is preferably formed of a rock or mineral.

## Revendications

1. Dispositif de chauffage pour chauffer simultanément une pluralité de pastilles de charbon pour les utiliser ensuite dans un narguilé dit chicha, dans lequel
le dispositif de chauffage (1) comprend un boîtier (5) ayant un volume de boîtier (6) qui fournit un volume de réception (4) pour la pluralité de pastilles de charbon (2) à chauffer simultanément, dans lequel la pluralité de pastilles de charbon (2) peuvent être insérées, et
le dispositif de chauffage (1) comprend un moyen de chauffage électrique (20) ayant au moins un élément chauffant (9) entourant au moins partiellement la pluralité de pastilles de charbon (2) pour chauffer simultanément la pluralité de pastilles de charbon (2),
**caractérisé en ce que**
le boîtier (5) comprend un récipient de réception (12), le récipient de réception (12) formant un volume essentiellement fermé, dans lequel de l'air chaud ou du gaz chaud peut être collecté et maintenu.

2. Dispositif de chauffage selon la revendication 1, dans lequel le moyen de chauffage (20) comprend un contrôleur (8) pour piloter ledit au moins un élément chauffant (9).

3. Dispositif de chauffage selon l'une des revendications précédentes, dans lequel il est prévu au moins deux éléments chauffants (9) qui entourent sur au moins deux côtés la pluralité de pastilles de charbon à chauffer simultanément.

4. Dispositif de chauffage selon l'une des revendications précédentes, dans lequel un ventilateur de circulation (7) est disposé sur le boîtier (5) pour introduire de l'air, en particulier de l'oxygène.

5. Dispositif de chauffage selon l'une des revendications précédentes, dans lequel il est prévu au moins un capteur (30) pour détecter un état d'échauffement de la pluralité de pastilles de charbon (2) introduites, le capteur (30) détectant en particulier une température dans le volume de réception (4) et/ou de la pluralité de pastilles de charbon (2) introduites.

6. Dispositif de chauffage selon la revendication 2 ou 5, dans lequel le capteur (30) transmet la température détectée au contrôleur (8) configuré pour évaluer la température et pour piloter le ventilateur de circulation (7) et/ou ledit au moins un élément chauffant sur la base de la température détectée et/ou évaluée.

7. Dispositif de chauffage selon la revendication 2, 5 ou 6, dans lequel au moins une valeur de consigne prédéterminée, en particulier pour la température de la pluralité de pastilles de charbon (2) et/ou pour le volume de réception (4), est mémorisée dans le contrôleur (8), et le contrôleur (8) pilote le ventilateur de circulation (7) et/ou ledit au moins un élément chauffant lorsque la température passe au-dessous ou au-dessus de ladite au moins une valeur de consigne.

8. Dispositif de chauffage selon la revendication 5, dans lequel un écran d'affichage (18) est prévu sur le boîtier (5), qui affiche l'état d'échauffement de la pluralité de pastilles de charbon introduites (2), en particulier qui affiche un intervalle de temps encore à attendre ou un intervalle de temps prédéterminé.

9. Dispositif de chauffage selon l'une des revendications précédentes, au moins selon la revendication 2, dans lequel le contrôleur (8) est relié à un commutateur (32) qui, lorsqu'il est actionné, affiche et/ou fait résonner un signal de commutateur, la commutation du commutateur (32) ayant lieu lorsqu'il a été communiqué au contrôleur (8) que la pluralité de pastilles de charbon (2) sont utilisables de préférence pour les utiliser ensuite dans un narguilé dit chicha.

10. Dispositif de chauffage selon l'une des revendications précédentes, dans lequel
le boîtier (5) présente une ouverture à laquelle peut être fixé un élément de conduit, en particulier un tuyau flexible,
de préférence, l'élément de conduit relie le boîtier (5) à un système de ventilation, et/ou
le boîtier (5) présente au moins une autre ouverture,
de préférence, l'autre ouverture est conçue comme une fente de ventilation, en particulier comme une fente en forme de branchies sur les parois latérales du boîtier (5),
de préférence, la fente de ventilation est conçue pour effectuer un échange d'air et/ou de chaleur entre le volume de boîtier (6) et l'environnement du dispositif de chauffage (1).

11. Dispositif de chauffage selon l'une des revendications précédentes, dans lequel
de préférence, ledit au moins un élément chauffant (9) est disposé dans le récipient de réception (12),
de préférence, le récipient de réception (12) et le boîtier (5) présentent chacun une ouverture de manoeuvre,
de préférence, les ouvertures de manoeuvre sont mélangées de manière à se coïncider, de sorte que le volume de réception (4) puisse être introduit dans le récipient de réception (12),
de préférence, le récipient de réception (12) présente au moins un raccord (13) sur sa face extérieure,
en particulier, le raccord (13) est configuré pour alimenter l'élément chauffant (9) en énergie,
de préférence, le récipient de réception (12) comprend un capteur (30),
en particulier, le capteur (30) est configuré pour mesurer la température dans le récipient de réception (12).

12. Dispositif de chauffage selon l'une des revendications précédentes, dans lequel le volume de réception (4) est introduit à travers l'ouverture de manœuvre du boîtier (5), en particulier à travers une ouverture de manœuvre sur une paroi latérale du boîtier (5), et/ou le volume de réception (4) est introduit à travers l'ouverture de manœuvre du récipient de réception (12), parallèlement à un plan de positionnement du dispositif de chauffage (1).

13. Dispositif de chauffage selon l'une des revendications précédentes, dans lequel une pluralité de plans peuvent être formés dans le boîtier (5) et/ou dans le récipient de réception (12), de préférence au moins un volume de réception (4) peut être disposé sur chaque plan, en particulier un volume de réception (4) séparé pour chaque plan, de préférence au moins un élément chauffant (9) peut être disposé entre deux plans.

14. Dispositif de chauffage selon l'une des revendications précédentes, dans lequel
le récipient de réception (12) présente une ouverture,
de préférence, une unité de conduit, en particulier une cheminée, peut être fixée à l'ouverture, et/ou
le boîtier (5) présente une ouverture supplémentaire afin de passer l'unité de conduit à travers l'ouverture supplémentaire,
de préférence, une unité de purification de gaz, en particulier un catalyseur, peut être disposé(e) sur et/ou dans l'unité de conduit,
en particulier, les gaz qui sortent de l'unité de purification de gaz sont collectés par une autre unité de conduit,
de préférence, les gaz collectés sont renvoyés au récipient de réception (12) par l'intermédiaire de l'autre unité de conduit.

15. Dispositif de chauffage selon l'une des revendications précédentes, dans lequel la face extérieure du boîtier (5) et/ou la face extérieure du récipient de réception (12) est pourvue d'une couche isolante,
de préférence, la couche isolante est intégrée dans le boîtier (5) et/ou le récipient de réception (12),
de préférence, la couche isolante est formée à partir d'une roche ou d'un minéral.
